Europäisches Patentamt

European Patent Office

Office européen des brevets

(11) Veröffentlichungsnummer: **0 322 833**
**A1**

# (12) EUROPÄISCHE PATENTANMELDUNG

(21) Anmeldenummer: 88121665.9

(22) Anmeldetag: 24.12.88

(51) Int. Cl.4: **F16B 2/00 , F16B 7/18 , F16L 3/00**

(30) Priorität: 31.12.87 DE 3744597

(43) Veröffentlichungstag der Anmeldung:
05.07.89 Patentblatt 89/27

(84) Benannte Vertragsstaaten:
AT CH DE ES FR GB IT LI NL

(71) Anmelder: Müller, Franz
Eichelhäherstrasse 1
D-6200 Wiesbaden(DE)

(72) Erfinder: Müller, Franz
Eichelhäherstrasse 1
D-6200 Wiesbaden(DE)

(74) Vertreter: Jochem, Bernd, Dipl.-Wirtsch.-Ing.
et al
Patentanwälte Beyer & Jochem Postfach 17
01 45
D-6000 Frankfurt/Main(DE)

(54) Stützelement zur biegesteifen Krafteinleitung in einen Befestigungspunkt.

(57) Die Erfindung betrifft ein Stützelement zur biegesteifen Krafteinleitung in einen Befestigungspunkt, dessen Körper zumindest teilweise hohl ist sowie ein erstes (14) und ein zweites (16) Befestigungsmittel aufweist, die koaxial zueinander angeordnet und zumindest teilweise mit Gewinde versehen sind und von denen das erste (14) zur Anbringung an den Befestigungspunkt und das zweite (16) zur Anbringung eines Tragelementes für eine Last dient. Die Erfindung ist dadurch gekennzeichnet, daß zwischen den Befestigungsmitteln (14, 16) eine Materialbrücke (19) besteht, die in axialer Richtung nicht länger ist als der axiale Abstand zwischen den Befestigungmitteln (14, 16).

fig. 1

## Stützelement zur biegesteifen Krafteinleitung in einen Befestigungspunkt

Die Erfindung betrifft ein Stützelement zur biegesteifen Krafteinleitung in einen Befestigungspunkt, dessen Körper zumindest teilweise hohl ist sowie ein erstes und ein zweites Befestigungsmittel aufweist, die koaxial zueinander angeordnet sowie zumindest teilweise mit Gewinde versehen sind und von denen das erste zur Anbringung an dem Befestigungspunkt und das zweite zur Anbringung eines Tragelementes für eine Last dient.

In der Befestigungstechnik sind häufig leichte Gegenstände, z. B. Rohrleitungen mit großem Abstand zu befestigen. Dabei ist es einerseits wünschenswert den Arbeitsaufwand zu reduzieren. Andererseits soll mit möglichst wenig Materialaufwand und wenn möglich mit vorhandenen, marktüblichen Techniken ausgekommen werden. Außerdem soll ein hierfür vorzusehendes Element variabel zu dimensionieren und zur Erlangung eines möglichst großen Arbeitsspielraumes möglichst klein und damit platzsparend sowie kostengünstig in der Herstellung und in der Anwendungssituation sein. Die generelle Lösung hierfür besteht in der Schaffung eines stützenden Zwischengliedes, welches zwischen einem Ankerbolzen mit Gewinde und einem den Abstand variabel überbrükkendes Tragelement so eingebaut wird, daß die aus der Belastung resultierenden Biegekräfte am meist dünneren Ankerbolzen vollkommen oder überwiegend als Zugkräfte wirken. Dabei werden die Biegekräfte von dem dickeren Tragelement aufgenommen.

Aus dem DE-GM 84 17 214 ist ein derartiges, in dieser Schrift als Befestigungselement bezeichnetes Zwischenglied bekannt. Es besteht aus einem in seinem Inneren völlig hohlen Kegeltopf, auf dessen breiterer Stirnseite ein gewölb ter Boden aufgebördelt ist. An beiden Stirnseiten besitzt er zwei koaxial zueinander angeordnete Bohrungen, die teilweise mit Gewinde versehen sind. Die eine Bohrung dient zur Anbringung des Elementes an dem Befestigungspunkt, die andere zur Aufnahme des den Abstand überbrückenden Tragelementes. Außerdem ist der Topf in seinen seitlichen Kegel-. wandungen mit den Querschnitt schwächenden Ausnehmungen versehen. Der völlig hohle Kegeltopf und die Ausnehmungen sollen dabei eine kontrollierte Verformung des Befestigungselementes bei Lastspitzen durch Bombenexplosionen oder Erdbeben ermöglichen, um so einen Bruch der tragenden Teile des Befestigungspunktes zu vermeiden. In den Fällen, in denen das Zwischenglied seine Form auch bei extremer Belastung beibehalten soll, kann aber dieses bekannte Befestigungselement nicht eingesetzt werden. Außerdem ist es bei dem vorbekannten Befestigungselement nachteilig, daß die auftretenden Kräfte "Spazieren" geführt werden.

Es ist Aufgabe der Erfindung, ein Stütz- oder Befestigungselement der eingangs genannten Art zu schaffen, das selbst unter extremer Beanspruchung völlig steif bleibt und das eine möglichst günstige Führung der Kräfte erlaubt.

Vorstehende Aufgabe wird dadurch gelöst, daß zwischen den Befestigungsmitteln eine Materialbrücke besteht, die radial innen im wesentlichen nicht länger ist als der axiale Abstand zwischen den Befestigungsmitteln.

Die vorgeschlagene Lösung ermöglicht ein völlig steifes Stützelement, das selbst bei hohen Lastspitzen seine Form unverändert beibehält. Außerdem werden die Kräfte auf dem kürzesten Weg zwischen dem Krafteinleitungs- und dem Kraftausleitungspunkt geführt.

Zur weiteren Erhöhung der Steifigkeit kann das Stützelement mit Versteifungselementen versehen werden, die durch sich von den Befestigungsmitteln und/oder der Materialbrücke radial zur Mantelwand seines Körpers erstreckende Rippen gebildet sind. Vorzugsweise sollen dabei die Rippen in einem Winkel von 90° zueinander angeordnet werden. Es ist aber auch möglich, daß das Stützelement weitestgehend aus Vollmaterial hergestellt wird.

Als Befestigungsmittel können verschiedene Lösungen vorgesehen werden. So ist es möglich, daß das erste und/oder zweite Befestigungsmittel jeweils durch einen zumindest teilweise mit Gewinde versehenen Bolzen gebildet ist. Es besteht aber auch die Möglichkeit, daß das erste und/oder das zweite Befestigungsmittel durch jeweils eine zumindest teilweise mit Gewinde versehene Bohrung gebildet ist. Selbstverständlich können die beiden vorgeschlagenen Befestigungsmittel in der Weise miteinander kombiniert werden, daß auf der einen Seite des Stützelementes ein Gewindebolzen und auf der anderen eine Gewindebohrung vorgesehen sind. Darüber hinaus kann aber auch jede andere Befestigungsart für die Befestigungsmittel vorgesehen werden.

Da an die Verschraubung mit dem Maueranker und an die Verschraubung mit dem Tragelement unterschiedliche Anforderungen gestellt werden können, besteht die Möglichkeit, daß die beiden als Befestigungsmittel dienenden Bohrungen zwei zueinander unterschiedliche mit Gewinde versehene Innendurchmesser aufweisen.

Um die Bruchgefahr der belasteten Gewinde in den ersten Gewindegängen zu vermeiden, kann vorgesehen werden, daß sich an das erste und/oder zweite Befestigungsmittel in axialer Richtung nach außen ein Verlängerungsstück anschließt, das zur Aufnahme von Lasten mit dem Befestigungselement des Befestigungspunktes bzw. des Tragelementes zusammenwirkt.

In weiterer Ausgestaltung der Erfindung ist der Körper des Stützelementes an seiner Grundfläche mit einer Vertiefung versehen. Hierdurch wird ein punktuelles Anliegen des Stützelementes weitgehend verhindert und somit eine gute Abstützung gewährleistet.

Weitere bevorzugte Ausgestaltungen der Erfindung sowie ein Ausführungsbeispiel werden nachstehend anhand der Zeichnung erläutert. Es zeigen:

Fig. 1 eine Ansicht und einen halbseitigen Querschnitt durch ein erfindungsgemäßes Stützelement,

Fig. 2 eine Draufsicht auf die Unterseite des Stützelementes gemäß Fig. 1.

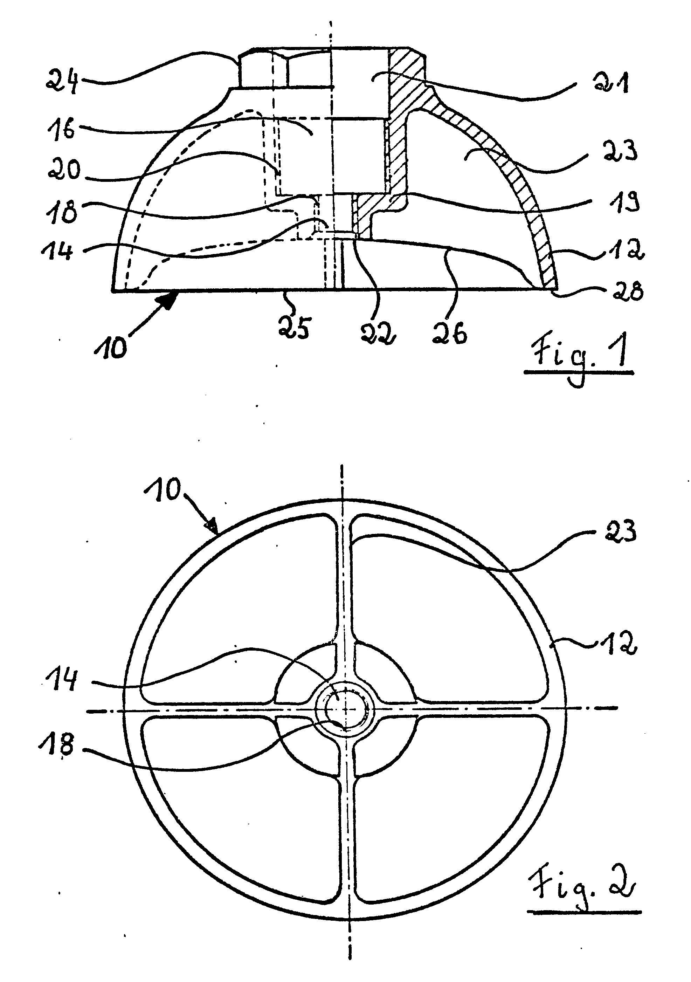

Ein in Fig. 1 gezeigtes Stützelement 10 besitzt einen halbkugelförmigen Körper 12, der aus Gußeisen hergestellt ist. Die Erfindung ist aber nicht ausschließlich auf Gußeisen als Material beschränkt. Es ist selbstverständlich jedes andere Material denkbar.

Koaxial zu seiner Hauptsymmetrieachse besitzt das Stützelement 10 zwei als erstes und zweites Befestigungsmittel 14, 16 dienende Bohrungen, die zueinander unterschiedliche Innendurchmesser aufweisen. Sie sind durch eine Materialbrücke 19 in der Weise miteinander verbunden, daß sie unmittelbar aneinander anschließen. Es ist aber auch denkbar, daß sich zwischen den beiden Bohrungen 14, 16 ein nicht gezeigter Materialabschnitt befindet. Die vollständig mit einem Gewinde 18 versehene erste Bohrung 14 weist in ihrem Mündungsbereich nach außen eine zum leichteren Ansetzten an einen Gewindebolzen dienende Fase 22 auf und dient zur Befestigung des Stützelementes 10 an einen nicht gezeigten Befestigungspunkt, beispielsweise einem Maueranker. Dagegen ist die zweite Bohrung 16 nur teilweise mit einem Gewinde 20 versehen, welches sich von dem Übergangsbereich von der ersten zu der zweiten Bohrung aus erstreckt. Diese zweite Bohrung 16 dient zur Anbringung eines nicht gezeigten Tragelementes für eine Last an dem Stützelement 10. Der sich von dem nach außen weisenden Mündungsbereich der zweiten Bohrung 16 aus erstreckende glatte Abschnitt 21 ermöglicht es, daß die von der Last hervorgerufenen Kräfte nicht im Bereich der Gewinde von dem Tragelement auf das Stützelement 10 weitergeleitet werden, sondern im Bereich des glatten Abschnittes 21. Hierdurch wird verhindert, daß das Tragelement an der durch das Gewinde geschwächten Stelle infolge der äußeren Last abbrechen kann. Je nach Höhe der auftretenden Kräfte kann dieser glatte Bereich durch angesetzte Rohrstücke nach außen weiter verlängert werden. Dies ist auch für die erste Bohrung 14 möglich.

Von den beiden Bohrungen 14, 16 erstrecken sich vier im Winkel von 90° zueinander angeordnete Versteifungsrippen 23 radial nach außen (Fig. 2). Die Form und die Dicke der Rippen 23 richtet sich dabei nach den durch das Stützelement 10 aufzunehmenden äußeren Lasten. Es besteht aber auch die Möglichkeit, daß in dem Stützelement 10 anstelle der Rippen 23 Vollmaterial angeordnet ist.

Im Bereich seines Scheitelpunktes ist das halbkugelförmige Stützelement 10 mit einem Außensechskant 24 versehen. Dieser Außensechskant 24 ermöglicht den Ansatz eines entsprechenden Werkzeuges, um das Stützelement 10 an dem Befestigungspunkt festzuschrauben.

In seiner Grundfläche 25 weist das Stützelement 10 eine kreisförmige Vertiefung 26 auf. Ihr Durchmesser ist nur etwas kleiner als der Durchmesser des halbkugelförmigen Stützelementes 10 an dieser Stelle, so daß ein Abstützungs ring 28 entsteht. Hierdurch wird ein punktuelles Anliegen des Stützelementes 10 weitgehend verhindert und somit eine gute Abstützung gewährleistet. Der Durchmesser der kreisförmigen Vertiefung 26 kann dabei je nach den abzustützenden Kräften variieren, so daß der Abstützring 28 unterschiedliche Breiten aufweisen kann.

## Ansprüche

1. Stützelement zur biegesteifen Krafteinleitung in einen Befestigungspunkt, dessen Körper zumindest teilweise hohl ist sowie ein erstes und ein zweites Befestigungsmittel aufweist, die koaxial zueinander angeordnet sowie zumindest teilweise mit Gewinde versehen sind und von denen das erste zur Anbringung an dem Befestigungspunkt und das zweite zur Anbringung eines Tragelementes für eine Last dient, **dadurch gekennzeichnet,** daß zwischen den Befestigungsmitteln (14, 16) eine Materialbrücke (19) besteht, die radial innen im wesentlichen nicht länger ist als der axiale Abstand zwischen den Befestigungsmitteln (14, 16).

2. Stützelement nach Anspruch 1, **dadurch gekennzeichnet,** daß es Versteifungselemente (22) aufweist, die durch sich von den Befestigungsmitteln (14, 16) und/oder der Materialbrücke radial zur Mantelwand seines Körpers (12) erstreckende Rippen gebildet sind.

3. Stützelement nach Anspruch 2, **dadurch gekennzeichnet,** daß die Rippen im Winkel von 90° zueinander angeordnet sind.

4. Stützelement nach einem der Ansprüche 1 bis 3, **dadurch gekennzeichnet**, daß das erste und/oder zweite Befestigungsmittel durch einen Bolzen gebildet ist.

5. Stützelement nach einem der Ansprüche 1 bis 3, **dadurch gekennzeichnet**, daß das erste und/oder das zweite Befestigungsmittel durch eine Bohrung (14, 16) gebildet ist.

6. Stützelement nach Anspruch 5, **dadurch gekennzeichnet**, daß die beiden Bohrungen (14, 16) miteinander in Verbindung stehen.

7. Stützelement nach Anspruch 5 oder 6, **dadurch gekennzeichnet**, daß die beiden Bohrungen (14, 16) zwei unterschiedliche mit Gewinde (18, 20) versehene Innendurchmesser aufweisen.

8. Stützelement nach einem der Ansprüche 1 bis 7, **dadurch gekennzeichnet**, daß die erste oder zweite Bohrung (14, 16) ein sich axial nach außen an das Gewinde (18, 20) anschließendes Teilstück (21) ohne Gewinde aufweist.

Fig. 1

Fig. 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | **EINSCHLÄGIGE DOKUMENTE** | | EP 88121665.9 |
| D,A | <u>DE - Ul - 8 417 214</u> (SIKLA GMBH & CO KG) <br><br> * Fig. 1,2,3,9; Seiten 8,9,10 * <br><br> -- | 1,4,5 | F 16 B 2/00 <br> F 16 B 7/18 <br> F 16 L 3/00 |
| A | <u>DE - Al - 1 575 139</u> (GRAY & HULEGUARD INC.) <br><br> * Anspruch 1; Fig. 1 * <br><br> ---- | 1,7,8 | |

RECHERCHIERTE
SACHGEBIETE (Int. Cl.4)

E 04 B

F 16 B

F 16 F

F 16 L

Der vorliegende Recherchenbericht wurde für alle Patentansprüche erstellt.

| Recherchenort | Abschlußdatum der Recherche | Prüfer |
|---|---|---|
| WIEN | 10-04-1989 | RIEMANN |